# EUROPEAN PATENT APPLICATION

(11) **EP 2 690 201 A1**
(43) Date of publication of application: **29.01.2014**
(21) Application number: 12762849.3
(22) Date of filing: 22.03.2012
(51) Int. Cl.: C25D 9/08, B32B 15/08, C09D 5/08, C09D 7/12, C09D 133/02, C09D 135/00

(54) **SURFACE TREATMENT AGENT COMPOSITION FOR TIN-PLATED STEEL, AND TIN-PLATED STEEL SUBJECTED TO SURFACE TREATMENT**

(30) Priority: 25.03.2011 JP 2011067962
(71) Applicant: Nippon Paint Co., Ltd., Osaka-shi Osaka 531-8511 (JP)
(72) Inventor: UCHIKAWA, Miwa, Tokyo 140-8675 (JP); MATSUKAWA, Masahiko, Tokyo 140-8675 (JP); HIRANO, Tomio, Tokyo 140-8675 (JP)
(74) Representative: HOFFMANN EITLE
(86) International application number: PCT/JP2012/057348
(87) International publication number: WO 2012/133111

(57) **Abstract**

The purpose of the present invention is to provide a surface treatment agent composition which contains aluminum as the coating film formation component and exhibits excellent properties for removing tin ions within a treatment bath when subjecting a tin-plated steel to electrolytic surface treatment, thereby forming a coating film exhibiting excellent corrosion resistance and yellowing resistance. This surface treatment agent composition is used for subjecting a tin-plated steel or a tin-based alloy-plated steel to electrolytic surface treatment and contains aluminum ions, fluorine ions, and polycarboxylic acid. The tin ions that eluted from the tin-plated steel are precipitated within and removed from the treatment bath by using this surface treatment agent composition.

## Description

### TECHNICAL FIELD

The present invention relates to a surface treatment agent composition for tin-plated steel, more specifically, to a surface treatment agent composition for tin-plated steel capable of imparting blackening resistance to a tin-plated steel when used in an electrolytic surface treatment of the steel.

### BACKGROUND ART

The chromate treatment has heretofore been known as a treatment for improving adhesion of a steel or a tin-plated steel to an organic film such as a coating film while imparting corrosion resistance to the steel or tin-plated steel. The chromate treatment has widely been employed in the fields of home electric appliances, building materials, vehicles, air crafts, containers, and the like due to its excellent corrosion resistance and adhesion to organic films.

Usages of a tin- or tin-based alloy-plated steel include a metal container such as a beverage can, for example, and the chromate treatment of subjecting the tin- or tin-based alloy-plated steel to cathode electrolysis in a solution of sodium dichromate has been performed as a surface treatment for the metal container. In this case, since the chromate-treated surface expresses excellent adhesion to an organic resin coating, the chromate treatment is remarkably useful for forming a barrier layer such as a coating film or a laminate on the surface of the metal container.

However, hexavalent chromium, which is used for the chromate treatment, is toxic and has a heavy environmental burden. Since the finished product is subjected to a treatment for removing hexavalent chromium, use of the product is not problematic. However, there has been a trend toward a reduction and abolishment of the use of compounds containing chromium such as hexavalent chromium in recent years. Also, since a large amount of cost is required for wastewater and exhaust treatments and disposal caused by performing the chromate treatment, there has a trend toward omitting the chromate treatment which has been performed on the tin- or tin-based alloy-plated steels in recent years. Therefore, there is a demand for development of a surface treatment with non-chromium which is an alternative for the chromate treatment.

For instance, Patent Literature 1 proposes an immersion treatment as a non-chromium-based surface treatment of steel, in which a treatment solution containing zirconium or titanium is used. In this case, a coating film including oxide of zirconium or titanium is formed on a surface of the steel. However, the steel which is surface-treated by treatment of immersing the steel into a treatment solution containing zirconium or titanium is inferior in corrosion resistance of a formed coating film and, slow in deposition of the coating film compared to a steel with the electrolytic chromate treatment which has been employed for metal containers. Therefore, the immersion treatment has a problem of considerably poor productivity. Accordingly, as a high speed treatment process to replace the immersion treatment, a zirconium and/or titanium treatment utilizing cathode electrolysis has been proposed (for example, see Patent Literatures 2 and 3).

Further, there has been proposed a surface-treated metal sheet in which a coating film of aluminum oxide having corrosion resistance is formed on a surface of a steel by performing cathode electrolysis using a treatment solution containing aluminum as a coating film-forming component (for example, see Patent Literature 4).
[Patent Document 1] Pamphlet of PCT International Publication No. W02002/103080
[Patent Document 2] Japanese Unexamined Patent Application, Publication No. 2004-190121
[Patent Document 3] Japanese Unexamined Patent Application, Publication No. 2005-97712
[Patent Document 4] Japanese Unexamined Patent Application, Publication No. 2006-348360

### DISCLOSURE OF THE INVENTION

### Problems to be Solved by the Invention

By the way, in the case of forming on a surface of a tin-plated steel a coating film of a metal component contained in a treatment solution by utilizing the cathode electrolysis, tin ions are contained in a treatment bath due to elution of the tin ions from the tin-plated steel which is the treated substrate during the treatment. Accordingly, the tin ions in the treatment bath are incorporated into the coating film to be formed or is deposited on a surface of the coating film, and a sulfur component contained in a beverage housed in a container of the treated substrate reacts with the tin ions in the coating film, or oxygen penetrated into the coating film from a small defect of the formed coating film oxidizes the tin ions in the coating film, thereby causing an abnormal appearance such as blackening or yellowing on the formed coating film. It is therefore necessary to remove the tin ions from the treatment bath by increasing pH of the treatment bath during the treatment, but, zirconium, titanium, or aluminum which is the component forming the coating film is undesirably precipitated together with the tin ions when pH of the treatment bath is increased. Therefore, a problem that it is difficult to efficiently remove the tin ions eluted from the treated substrate into the treatment bath is raised.

The present invention was accomplished in view of the above-described circumstances, and an object of the present invention is to provide a surface treatment agent composition including aluminum as a coating film-forming component, the surface treatment agent composition being capable of forming a coating film excellent in blackening resistance and yellowing resistance due to its excellent tin ion-removing property in a treatment bath.

### Means for Solving the Problems

The inventors conducted extensive researches in order to solve the above-described problems and accomplished the present invention based on the findings that, by performing a surface treatment on a tin-plated steel with the use of a surface treatment agent composition containing aluminum ions as a coating film-forming component and, further, polycarboxylic acid, the polycarboxylic acid selectively reacts with tin ions to cause precipitation of the tin ions, and a concentration of the tin ions in the treatment bath can be kept to a level which does not exert adverse influence on properties of the coating film.

The present invention is a surface treatment agent composition for tin-plated steel, to be used for electrolytic surface treatment of a tin- or tin-based alloy-plated steel, including aluminum ions, fluorine ions, and polycarboxylic acid.

The polycarboxylic acid may preferably be a homopolymer containing a monomer selected from acrylic acid, methacrylic acid, maleic acid, and itaconic acid as a constitutional unit or a copolymer containing at least one of these monomers as the constitutional unit.

Also, a ratio [C group] / [Al] of a molar concentration [C group] of carboxyl groups contained in the polycarboxylic acid to a molar concentration [Al] of the aluminum ions may preferably be 0.005 to 2.0.

Further, a ratio [F] / [Al] of a molar concentration [F] of the fluorine ions to a molar concentration [Al] of the aluminum ions may preferably be 1 to 4.

Further, a mass concentration of the aluminum ions may preferably be 100 to 10,000 ppm.

Further, a pH value at 25°C of the surface treatment liquid for tin-plated steel may preferably be 1 to 5.

Further, a mass concentration of tin ions contained in the surface treatment liquid for tin-plated steel may preferably be 500 ppm or less.

The present invention provides a tin-plated steel which is surface-treated with the surface treatment agent composition for tin-plated steel.

### Effects of the Invention

According to the present invention, there is provided a surface treatment agent composition comprising aluminum as a coating film-forming composition, which enables to form a coating film excellent in blackening resistance and yellowing resistance due to its excellent property of removing tin ions in a treatment bath in an electrolytic surface treatment of a tin-plated steel.

### PREFERRED MODE FOR CARRYING OUT THE INVENTION

Hereinafter, one embodiment of a surface treatment agent composition for tin-plated steel of the present invention will be described. The surface treatment agent composition for tin-plated steel of the present invention (hereinafter simply referred to as "surface treatment agent composition" in some cases) is used for subjecting tin- or tin-based alloy-plated steel to an electrolytic surface treatment and includes aluminum ions, fluorine ions, and polycarboxylic acid.

The tin- or tin-based alloy-plated material (hereinafter collectively referred to as "tin-plated steel" in some cases) which is an object to be treated with the surface treatment agent composition is a steel of which a surface is plated with tin or a tin-based alloy. An amount of the tin- or tin-based-plating formed on a surface of a steel is not particularly limited. Also, examples of the tin-based alloy to be used for fabrication of the tin-based alloy-plated steel include, but are not limited to, a tin-silicon alloy, a tin-silver alloy, a tin-indium alloy, a tin-copper alloy, a tin-aluminum alloy, a tin-germanium alloy, and the like.

The tin-plated steel which is the object to be treated is immersed into the surface treatment agent composition to undergo the electrolytic surface treatment. In the electrolytic surface treatment, the tin-plated steel is immersed into a treatment bath of the surface treatment agent composition and becomes a cathode when a negative electric charge is applied thereto. On the other hand, in the bath of the surface treatment agent composition, an anode to which a positive electric charge is applied is provided as a counter electrode of the tin-plated steel to be treated. An electrolysis reaction occurs when a voltage is applied between the anode and the cathode, and the pH of the solution around the cathode which is the treatment object is increased. Thus, as is well-known to those skilled in the art, the aluminum ions or an aluminum complex contained in the surface treatment agent composition, which is described later in this specification, can no longer maintain the dissolved state and is deposited as a coating film of an aluminum compound on a surface of the treatment object. The deposited coating film imparts blackening resistance to the treatment object. A preferred example of a quantity of electric to be applied between the anode and the cathode includes, but is not limited to, 1 to 24 cycles when a cycle consists of 0.15 second of a current application time at a current density of 1 to 10 A/dm² and 0.50 second of a halt time, and more preferred example thereof is 1 to 10 cycles. After the electrolytic surface treatment, washing with water or washing with pure water may be performed by using warm water or hot water, and properties of the coating film may be further improved by reducing excessive fluorine in the coating film depending on the usage. A pH level of the water used for the washing with water may be adjusted to be within the alkali range. A chemical species to be used for the pH adjustment is not limited.

The surface treatment agent composition may preferably be an aqueous solution but may contain an aqueous solvent such as alcohol and ketone in order to dissolve the components. Next, the components contained in the surface treatment agent composition will be described.

### [Aluminum Ion]

The surface treatment agent composition includes aluminum ions. The aluminum ions serve as a coating film-forming component in the electrolytic surface treatment as described above and, also, is present as compounds with components such as nitrate ions, fluorine ions, sulfate ions, and various ligands described later in this specification (hereinafter, the aluminum ion and the compounds (complexes) are collectively referred to as "aluminum ion(s)") in the surface treatment agent composition. The aluminum ions through the electrolytic surface treatment deposit on a surface of a tin-plated steel as a composition including aluminum oxide or aluminum hydroxide as a main component to form a coating film. The coating film imparts the blackening resistance to the tin-plated steel.

A content of aluminum ions in the surface treatment agent composition may preferably be 100 to 10,000 ppm. The content of aluminum ions being 100 ppm or more in the surface treatment agent composition enables to form the coating film having satisfactory blackening resistance on the surface of the tin-plated steel and, therefore, is preferred. The content of 10,000 ppm or less enables to maintain good aluminum ion solubility in the surface treatment agent composition, thereby enabling to form the homogeneous coating film on the surface of the tin-plated steel. A content of aluminum ions when expressed in terms of metal in the surface treatment agent composition may more preferably be 1000 to 5000 ppm, most preferably 1500 to 3000 ppm.

Examples of an aluminum ion source include aluminate such as sodium aluminate, fluoroaluminum such as sodium fluoroaluminate, aluminum hydroxide, aluminum fluoride, aluminum oxide, aluminum sulfide, aluminum nitrate, aluminum silicate, aluminum potassium sulfate, aluminum dihydrogenphosphate, aluminum lactate, and the like. These aluminum ion sources may be used alone or in combination of two or more species thereof. The aluminum nitrate is preferred as the aluminum ion source.

### [Fluorine Ion]

The surface treatment agent composition includes fluorine ions. The fluorine ions coordinate to the aluminum ions which are the coating film-forming component to solubilize the aluminum ions. Therefore, the fluorine ions enable the surface treatment agent composition to contain a sufficient amount of the aluminum ions and to be a homogeneous solution, thereby contributing improvement of homogeneity of the coating film to be formed.

A fluorine ion source may be a salt of each of various fluorides such as hydrofluoric acid, sodium fluoride, ammonium fluoride, ammonium hydrogen fluoride, sodium hydrogen fluoride (HF•NaF), and potassium fluoride or may be fluoroaluminum, aluminum fluoride, or the like which is exemplified above as the aluminum ion source. The fluorine ion sources may be used alone or in combination of two or more species thereof. These sodium fluoride and/or ammonium fluoride is preferred as the fluorine ion source.

As described in the foregoing, the fluorine ions homogenize the surface treatment agent composition by solubilizing the aluminum ions through the complex formation and thus improve the homogeneity of the coating film to be formed on the surface of the tin-plated steel. From the above-described viewpoint, [F]/[Al] which is a ratio of a molar concentration [F] of the fluorine ions to a molar concentration [Al] of the aluminum ions contained in the surface treatment agent composition may preferably be 1 to 4. The [F]/[Al] of 1 or more enables to sufficiently solubilize the aluminum ions in the surface treatment agent composition and to improve the homogeneity of the coating film to be formed on the surface of the tin-plated steel and, therefore, is preferred. The [F]/[Al] of 4 or less enables to suppress excessive etching of the tin-plated steel which is otherwise caused by the fluorine ions, thereby enabling to form the coating film having the satisfactory blackening resistance on the surface of the tin-plated steel. The [F]/[Al] may more preferably be 1.5 to 3.0, most preferably 1.9 to 2.6. The aluminum ion concentration and the fluorine ion concentration are an aluminum mass concentration expressed in terms of metal and a mass concentration expressed in terms of fluorine, respectively. The molar ratio [F]/[Al] of fluorine to aluminum ions is calculated by detecting the molar concentrations (mmol/L) of aluminum ions and fluorine from the mass concentrations (ppm) of aluminum ions and fluorine. It is possible to measure the aluminum ion concentration by using an ICP (inductively-coupled plasma spectrometry device) and the fluorine ion concentration by ion chromatography.

### [Polycarboxylic Acid]

The surface treatment agent composition includes polycarboxylic acid. As described above, the tin ions are eluted into the treatment bath from the tin-plated steel which is the treatment object during the electrolytic surface treatment, and absorption of the tin ions by a coating film formed on the surface of the tin-plated steel leads to deterioration of blackening resistance and yellowing resistance of the coating film. The inventors conducted researches in order to solve the problems and found that polycarboxylic acid added to the surface treatment agent composition captures and precipitates the tin ions eluted into the treatment bath, thereby suppressing a concentration of the tin ions in the treatment bath to 500 ppm or less which does not exert any influence on the properties of the coating film, more preferably less than 300 ppm, particularly preferably less than 50 ppm. Further, the inventors found that the polycarboxylic acid hardly or never captures the coating film-forming components such as the aluminum ions and, therefore, does not exert any influence on formation of the coating film. The present invention was accomplished based on the above-described findings, and the surface treatment agent composition of the present invention includes polycarboxylic acid. In the case of removing the tin ions from the treatment bath by using polycarboxylic acid, since it is unnecessary to increase a pH value of the treatment bath, it is possible to selectively remove the tin ions while hardly or never precipitating the coating film-forming components such as the aluminum ions contained in the treatment bath, and it is possible to stably maintain the treatment bath, thereby contributing to improvement in long-term continuous productivity. Iron ions derived from the steel can sometimes be eluted from the tin-plated steel in addition to the tin ions, and, in such a case, the eluted iron ions can be the cause of deterioration of blackening resistance and yellowing resistance of the coating film as is the case with the tin ions. Polycarboxylic acid selectively removes the iron ions, too.

Further, polycarboxylic acid has a chelate effect on the aluminum ions. Therefore, polycarboxylic acid aids dissolution of the aluminum ions which are the coating film-forming component in the surface treatment agent composition as is the case with the above-described fluorine ions. Furthermore, since the aluminum ions form a chelate with an organic substance such as polycarboxylic acid, deposition rate on a surface of the tin-plated steel which is caused by an increase in pH value is slowed down. Thus, deposition of a coarse substance otherwise caused by local excessive deposition on the surface of the tin-plated steel is suppressed, so that the homogeneous and dense coating film is formed on the tin-plated steel surface. Also, since the aluminum ions form a chelate with an organic substance such as polycarboxylic acid, a fluctuation in deposition behavior which is caused by a pH fluctuation of the treatment bath is reduced, thereby facilitating pH value control of the treatment bath in continuous production.

As the polycarboxylic acid, a polymer may preferably be used. Preferred examples of the polymer include a homopolymer containing a monomer selected from acrylic acid, methacrylic acid, maleic acid, and itaconic acid as a constitutional unit and a copolymer containing at least one species of these monomers as the constitutional unit. Polyitaconic acid and/or polyacrylic acid is preferred as the polycarboxylic acid.

In the case of using the copolymer as polycarboxylic acid, a copolymer obtained by copolymerization of two or more species of the above-described monomers may be used, or a copolymer obtained by copolymerization of one or more species of the above-described monomers and another monomer may be used. Examples of "another monomer" include a vinyl compound such as N-vinylpyrrolidone, N-vinylcarbazole, N-vinyloxazoline, N-vinyl-1,2,4-triazole, N-vinylcarbazole, N-vinylphthalimide, N-vinylsuccinimde, N-vinylimidazole, vinylsulfonic acid, 2-sulfoethyl(meth)acrylate, and vinil compound such as vinylsulfonic acid; vinyl ketones such as methyl vinyl ketone, phenyl vinyl ketone, and divinyl ketone; an acrylamide monomer such as (meth)acrylamide, N-methylol(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide, N-isopropyl acrylamide, acryloyl morpholine, N,N-dimethylaminopropyl acrylamide, diacetone acrylamide, N-2-hydroxyethyl acrylamide, and 2-acrylamide-2-methylsulfonic acid; (meth)acrylate ester monomers such as methyl(meth)acrylate, ethyl(meth)acrylate, n-butyl(meth)acrylate, isobutyl acrylate, tert-butyl(meth)acrylate, 2-ethylhexyl(meth)acrylate, lauryl methacrylate, phenyl acrylate, isobornyl(meth)acrylate, cyclohexyl methacrylate, tert-butylcyclohexyl (meth)acrylate, dicyclopentadienyl (meth)acrylate, dihydrodicyclopentadienyl (meth)acrylate, N,N-dimethylaminoethyl acrylate, 2-methacryloyloxyethyl succinic acid, ethylene glycol dimethacrylate, glycerin dimethacrylate, methaxytriethyleneglycol-2-hdyroxyethyl(meth)acrylate, 2-hydroxypropyl(meth)acrylate, 4-hydroxybutyl(meth)acrylate, methoxypolyethylene glycol methacrylate, and methoxypolyethylene glycol dimethacrylate; polymerizable nitriles such as acrylonitrile and methacrylonitrile; alkyl vinyl ethers such as methyl vinyl ether, ethyl vinyl ether, n-propyl vinyl ether, isopropyl vinyl ether, n-butyl vinyl ether, isobutyl vinyl ether, and tert-butyl vinyl ether; a polymerizable aromatic compound such as styrene, α-methylstyrene, tert-butylstyrene, parachlorostyrene, vinylnaphthalene, and p-styrenesulfonic acid; vinyl esters such as vinyl acetate, vinyl propionate, vinyl butyrate, vinyl trimethylacetate, vinyl caproate, vinyl caprylate, vinyl laurate, and vinyl stearate; conjugated dienes such as butadiene and isoprene; olefins such as ethylene, propylene, 1-butene, isobutylene, and 3-methyl-1-butene; an allyl compound such as ally chloride, diallyl phthalate, allyl alcohol, and allylsulfonic acid; and the like. These monomers as the "another monomer" may be used alone or in combination of two or more species thereof.

As described above, since polycarboxylic acid has the chelate effect on the aluminum ions, polycarboxylic acid attains the effects of aiding dissolution of the aluminum ions, enabling to form the homogeneous coating on the surface of the tin-plated steel, and facilitating the control of the surface treatment in the continuous production. The chelate effect is attributable to carboxyl groups contained in polycarboxylic acid. From the above-described viewpoint, a ratio [C group] / [Al] of a molar concentration [C group] of the carboxyl groups contained in polycarboxylic acid to the molar concentration [Al] of the aluminum ions contained in the surface treatment agent composition may preferably be within a predetermined range. A preferred example of the [C group]/[Al] may be 0.005 to 2.0, a more preferred example thereof may be 0.01 to 1.0, and a most preferred example thereof may be 0.02 to 0.5. The aluminum ion concentration is a mass concentration of the aluminum expressed in terms of metal. The molar ratio [C group]/[Al] of the carboxyl groups contained in polycarboxylic acid to the aluminum ions is calculated by detecting the molar concentrations (mmol/L) of the aluminum ions and the carboxyl groups contained in polycarboxylic acid from mass concentrations (ppm) of the aluminum ions and the carboxyl groups.

### [Other Components]

Other components may be added to the surface treatment agent composition in addition to the aluminum ions, fluorine ions, and polycarboxylic acid in order to improve various other required properties. Examples of such components include an antibacterial agent, a surfactant, a chelating agent, an anticorrosion agent, and the like.

Examples of the antibacterial agent include alcohols such as ethanol and isopropanol; a guanidine group-containing compound such as polyhexamethylene biguanidine hydrochloride; a benzimidazole-based compound such as 2-(4-thiazolyl)benzimidazole and methyl-2-benzimidazole carbamate; A phthalimide-based compound such as N-(trichloromethylthio)tetrahydrophthalimide and N-(fluorochloromethylthio)phthalimide; a phenol-based compound such as p-chloro-m-xylenol and p-chloro-m-cresol; a nitrile-based compound such as 2,4,5,6-tetrachloroisophthalonitrile and 1,2-dibromo-2,4-dicyanobutane; a pyridine-based compound such as (2-pyridylthio-1-oxide)sodium and bis(2-pyridylthio-1-oxide)zinc; an isothiazolone-based compound such as 2-methyl-4-isothiazolin-3-one and 5-chloro-2-methyl-4-isothiazolin-3-one; quaternary ammonium salts such as benzalkonium chloride and benzethonium chloride; benzoic acid; ethyl paraoxybenzoate; sorbic acid; potassium sorbate; sodium dehydroacetate; sodium propionate; and the like. The antibacterial agents may be used alone or in combination of two or more species thereof. A concentration of the antibacterial agent in the surface treatment agent composition may appropriately be set depending on the required property and, for example, may be 50 to 10,000 ppm.

The surfactant is not particularly limited, and a publicly known nonionic surfactant, cationic surfactant, and/or anionic surfactant may be used. The surfactants may be used alone or in combination of two or more species thereof. A concentration of the surfactant in the surface treatment agent composition may appropriately be set depending on the required property and, for example, may be 50 to 10,000 ppm.

The chelating agent is added in order to maintain the stable dissolution state of the aluminum ions as is the case with the above-described fluorine ions and polycarboxylic acid. Also, the chelating agent acts as a scavenger for an impurity with which the treatment bath is contaminated. The chelating agent is not particularly limited, and examples thereof include citric acid, gluconic acid, malonic acid, succinic acid, tartaric acid, phosphoric acid, ethylene diamine tetra-acetic acid, and the like. The chelating agents may be used alone or in combination of two or more species thereof. A concentration of the chelating agent in the surface treatment agent composition may appropriately be set depending on the required property and, for example, may be 50 to 10,000 ppm.

The anticorrosion agent is not particularly limited, and examples thereof include tannic acid, imidazoles, triazines, guanines, hydrazines, biguanide, a silane coupling agent, colloidal silica, amines, a phenol-based water-soluble organic compound including a phenol resin, and the like. The anticorrosion agents may be used alone or in combination of two or more species thereof. A concentration of the anticorrosion agent in the surface treatment agent composition may appropriately be set depending on the required property and, for example, may be 10 to 10,000 ppm.

### [Preparation of Surface Treatment Agent Composition]

The surface treatment agent composition is prepared by dissolving the above-described components into water, followed by stirring until homogeneity. The water into which the components are dissolved is not particularly limited, and examples thereof include tap water, well water, industrial water, ion exchanged water, and the like. Also, publicly known water-based solvent may be added to the water in order to aid the dissolution of the components. Examples of the water-based solvent include methanol, ethanol, isopropanol, methyl ethyl ketone, and the like.

As described in the foregoing, the surface treatment agent composition is decomposed by an electric current when subjecting the treatment object to the electrolytic surface treatment. Therefore, the surface treatment agent composition necessarily has certain electric conductivity, and a preferred example of the electric conductivity is, 10 to 60 mS/cm at 20°C. When the surface treatment agent composition has the above-specified electric conductivity, the balance between electrolytic surface treatment efficiency and electricity usage becomes favorable, and it is possible to speed up the electrolytic surface treatment and to reduce electricity usage.

Examples of a method for adjusting the electric conductivity of the surface treatment agent composition include a method for adding a salt to the surface treatment agent composition. Examples of the salt include, but are not limited to, sodium nitrate, sodium sulfate, ammonium nitrate, ammonium sulfate, lithium nitrate, and the like. An amount of the salt to be added is not particularly limited and may be decided by appropriately adjusting the amount to keep the electric conductivity of the surface treatment agent composition to a desired value.

A pH value of the surface treatment agent composition at 25°C may preferably be 1 to 5. With the pH value of the surface treatment agent of 1 or more, excessive etching of the tin-plated steel which is the substrate is suppressed to make it possible to form the coating film having favorable properties on the surface of the substrate. Also, with the pH value of the surface treatment agent of 5 or less, the solubility of the aluminum ions is maintained, so that the aluminum ions can be incorporated into the surface treatment agent in an amount sufficient for forming the coating film having favorable properties. The pH value of the surface treatment agent composition may more preferably be 2.5 to 3.6.

An acidic or basic compound may be added to the surface treatment agent to adjust the pH value of the surface treatment agent composition. Examples of the compound include, but are not particularly limited to, hydrochloric acid, sulfuric acid, nitric acid, sodium hydroxide, ammonium water, amino alcohols such as triethanolamine and dimethylethanolamine, potassium hydroxide, and the like. An amount of each of the compounds to be added is not particularly limited and may be decided by appropriately adjusting the amount to keep the pH value of the surface treatment agent composition to a desired value.

As described above, when the tin-plated steel is subjected to the electrolytic surface treatment by using the surface treatment agent composition of the present invention, the tin ions eluted from the tin-plated steel is precipitated and removed from the treatment bath. Therefore, the mass concentration of the tin ions in the treatment bath is suppressed to 500 ppm or less, and the coating film formed on the surface of the tin-plated steel is excellent in blackening resistance and is suppressed in yellowing with time.

Also, a tin-plated steel which is subjected to the surface treatment with the surface treatment agent composition for tin-plated steel is provided according to another aspect of the present invention. As described in the foregoing, the tin-plated steel has favorable blackening resistance and yellowing resistance since the coating film of the aluminum compound is formed on a surface thereof.

### EXAMPLES

The present invention will hereinafter be described in more details by giving examples, but the present invention is not limited to the following examples at all.

### [Surface Treatment Agent Composition]

Polyitaconic acid (manufactured by Iwata Chemical Co., Ltd.; trade name: PIA-728; molecular weight: about 3000), polyacrylic acid (manufactured by Nippon Shokubai Co., Ltd.; trade name: Aqualic HL-415; molecular weight: 10,000), aluminum nitrate [Al (NO₃)₃ • 9H₂O], and sodium fluoride (NaF) were blended and dissolved into tap water in such a manner as to obtain a solution having aluminum ions, polycarboxylic acid, and fluorine concentrations as shown in Table 1 as mass concentrations (ppm), thereby preparing each of surface treatment agent compositions of Examples 1 to 16 and Comparative Examples 1 to 4 of which pH values were not yet adjusted. Polyitaconic acid and polyacrylic acid were used as polycarboxylic acid. Polyitaconic acid was used as polycarboxylic acid in each of the examples and comparative examples except Example 11. Polyacrylic acid was used as polycarboxylic acid only in Example 11. In other words, the surface treatment agent composition of Example 11 is the same as the surface treatment agent composition of Example 1 except for using polyacrylic acid as polycarboxylic acid in place of polyitaconic acid.

Aluminum nitrate and sodium fluoride were used as the aluminum ion source and the fluorine source, respectively, and the aluminum concentration and the fluorine concentration shown in Table 1 are the mass concentration of aluminum expressed in terms of metal and the mass concentration expressed in terms of fluorine, respectively. Further, a molar concentrations (mmol/L) of the aluminum ions, fluorine, and carboxyl groups contained in polycarboxylic acid, a molar ratio [F]/[Al] of fluorine to the aluminum ions, and a molar ratio [C group] / [Al] of the carboxyl groups contained in polycarboxylic acid to the aluminum ions were calculated and are shown in Table 1. It is possible to calculate the concentration of the carboxyl groups contained in polycarboxylic acid with, for example, a mass concentration (ppm) of polyitaconic acid/(1/2 of a molecular weight of itaconic acid which is the constitutional unit) when polyitaconic acid is used.

**[Table 1]**

| | Al (ppm) | F (ppm) | Polycarboxylic acid (ppm) | Al (mmo l/L) | F (mmo l/L) | Carboxyl group (mmo l/L) | [F] /[Al] Molar ratio | [C group]/[Al] Molar ratio |
|---|---|---|---|---|---|---|---|---|
| Example 1 | 3000 | 4200 | 200 | 111 | 221 | 3 | 2.0 | 0.03 |
| Example 2 | 3000 | 4200 | 2900 | 111 | 221 | 44 | 2.0 | 0.40 |
| Example 3 | 3000 | 4200 | 7200 | 111 | 221 | 110 | 2.0 | 0.99 |
| Example 4 | 1000 | 1400 | 500 | 37 | 75 | 8 | 2.0 | 0.21 |
| Example 5 | 1000 | 1100 | 2600 | 37 | 58 | 40 | 1.6 | 1.08 |
| Example 6 | 1000 | 2500 | 500 | 37 | 132 | 8 | 3.6 | 0.21 |
| Example 7 | 1000 | 1400 | 4500 | 37 | 74 | 69 | 2.0 | 1.87 |
| Example 8 | 3000 | 2000 | 2000 | 111 | 105 | 31 | 0.9 | 0.28 |
| Example 9 | 11000 | 9000 | 1000 | 407 | 474 | 15 | 1.2 | 0.04 |
| Example 10 | 3000 | 9000 | 1000 | 111 | 474 | 15 | 4.3 | 0.14 |
| Example 11 | 3000 | 4200 | 200 | 111 | 221 | 3 | 2.0 | 0.02 |
| Example 12 | 3000 | 6000 | 1000 | 111 | 316 | 15 | 2.8 | 0.14 |
| Example 13 | 6000 | 8500 | 5000 | 222 | 447 | 77 | 2.0 | 0.335 |
| Example 14 | 3000 | 4200 | 6000 | 111 | 221 | 92 | 2.0 | 0.83 |
| Example 15 | 1000 | 1400 | 5000 | 37 | 74 | 77 | 2.0 | 2.08 |
| Example 16 | 5000 | 6000 | 50 | 185 | 316 | 1 | 1.7 | 0.004 |
| Comparative Example 1 | 0 | 1400 | 500 | 0 | 74 | 8 | - | - |
| Comparative Example 2 | 1000 | 0 | 500 | 37 | 0 | 8 | 0 | 0.21 |
| Comparative Example 3 | 1000 | 1400 | 0 | 37 | 74 | 0 | 2.0 | 0 |
| Comparative Example 4 | 3000 | 800 | 0 | 111 | 42 | 0 | 0.4 | 0 |

### [Evaluation of Tin Ion-Removing Property]

After adjusting the pH value to 2.5 of each of the surface treatment agent compositions of Examples 1 to 16 and Comparative Examples 1 to 4, 80 mL of each of the surface treatment agent compositions was transferred to a container having an inner diameter of 45 mm, and tin sulfide (II) was added so as to adjust the mass concentration of the tin ions to the value shown in Table 2, thereby preparing a simulant treatment bath. The reason for adding tin sulfide is to reproduce a state in which the tin ions are eluted into a treatment bath from a tin-plated steel during a surface treatment. Then, after adjusting the pH value of each of the treatment baths to the one shown in Table 2, the treatment baths were left to stand still for 6 hours, and then height of precipitates generated at the bottoms of the treatment baths was measured. The generated precipitates were derived from the tin ions contained in the treatment baths. As the evaluation, the sample in which the height of the precipitation was 0.5 mm or more was evaluated to be capable of tin ion removal (○), and the sample in which the height of the precipitation was 0.5 mm or less was evaluated to be incapable of tin ion removal. The results are shown in Table 2. Each of the pH values shown in Table 2 is the one detected at 25°C, and nitric acid and ammonium water were used for the pH adjustment.

### [Residual Tin Ion Concentration Measurement]

A supernatant liquid of the solution of the treatment bath in which the precipitate was generated was collected, and the precipitate was removed by using a filter paper. After confirming that there was no solid matter in the liquid by visual observation, the liquid was diluted with ion exchanged water in such a manner that a tin ion concentration is within the measureable concentration range while adjusting a pH value by using nitric acid or ammonium water in such a manner as to avoid a fluctuation in pH value. After that, the tin ion concentration was measured by using an inductively-coupled plasma emission spectrometry device (ICPE-9000, product of Shimadzu Corporation). From the obtained results, a tin ion concentration (ppm) remaining in the supernatant liquid was calculated based on the dilution ratio. As the evaluation, the sample in which a supernatant concentration was 300 ppm or more and 500 ppm or less was evaluated to be preferable; the sample in which a supernatant concentration was 50 ppm or more and less than 300 ppm was evaluated to be more preferable; and the sample in which a supernatant concentration was less than 50 ppm was evaluated to be most preferable.

**[Table 2]**

| | Surface treatment agent composition | Polycarboxylic acid (ppm) | Tin ion added amount (ppm) | Supernatant concentration (ppm) | pH | Tin ion-removing property |
|---|---|---|---|---|---|---|
| Test Example 1 | Example 1 | 200 | 300 | 40 | 3.5 | ○ |
| Test Example 2 | Example 2 | 2900 | 300 | 20 | 3.5 | ○ |
| Test Example 3 | Example 3 | 7200 | 300 | 250 | 3.5 | ○ |
| Test Example 4 | Example 4 | 500 | 300 | 250 | 3.5 | ○ |
| Test Example 5 | Examp le 5 | 2600 | 300 | 250 | 3.5 | ○ |
| Test Example 6 | Example 6 | 500 | 300 | 250 | 3.5 | ○ |
| Test Example 7 | Example 7 | 4500 | 300 | 250 | 3.5 | ○ |
| Test Example 8 | Example 8 | 2000 | 300 | 250 | 3.5 | ○ |
| Test Example 9 | Example 9 | 1000 | 300 | 250 | 3.5 | ○ |
| Test Example 10 | Example 10 | 1000 | 300 | 250 | 3.5 | ○ |
| Test Example 11 | Example 2 | 2900 | 300 | 250 | 0.9 | ○ |
| Test Example 12 | Example 4 | 500 | 300 | 200 | 1.9 | ○ |
| Test Example 13 | Example 4 | 200 | 300 | 15 | 4.2 | ○ |
| Test Example 4 | Example 4 | 200 | 50 | 20 | 3.5 | ○ |
| Test Example 15 | Example 4 | 200 | 500 | 310 | 3.5 | ○ |
| Test Example 16 | Example 4 | 200 | 1000 | 400 | 3.5 | ○ |
| Test Example 17 | Example 11 | 200 | 300 | 40 | 3.5 | ○ |
| Test Example 18 | Example 12 | 1000 | 300 | 20 | 3.5 | ○ |
| Test Example 19 | Example 13 | 5000 | 300 | 150 | 3.5 | ○ |
| Test Example 20 | Example 14 | 6000 | 300 | 150 | 3.5 | ○ |
| Test Example 21 | Example 15 | 5000 | 300 | 150 | 3.5 | ○ |
| Test Example 22 | Example 16 | 50 | 300 | 150 | 3.5 | ○ |
| Comparative Test Example 1 | Comparative Example 1 | 500 | 300 | 20 | 3.5 | ○ |
| Comparative Test Example 2 | Comparative Example 2 | 500 | 300 | 20 | 3.5 | ○ |
| Comparative Test Example 3 | Comparative Example 3 | 0 | 300 | 300 | 3.5 | × |
| Comparative Test Example 4 | Comparative Example 4 | 0 | 300 | 300 | 3.5 | × |

As shown in Table 2, it is understood that, since each of the surface treatment agent compositions containing polycarboxylic acid as one of the essential components according to the present invention has the favorable tin ion-removing property, even when the tin ions are eluted into the treatment bath during the surface treatment of the tin-plated steel, the diluted tin ions are precipitated and removed from the treatment bath, and absorption of the tin ions by a coating film formed on a surface of the tin-plated steel is suppressed. Though each of the surface treatment agent compositions of Comparative Examples 1 and 2 containing polycarboxylic acid also exhibits the favorable tin ion-removing property (Comparative Test Examples 1 and 2), the surface treatment agent compositions cause the problem in terms of coating film-forming property as described later in the test results since they do not contain the aluminum ions or fluorine which is one of the essential components of the present invention.

The supernatant concentrations of all of the samples were within the range of less than 500 ppm, and each of Examples 1, 2, 13, 14, 17, and 18 attained the supernatant concentration of less than 50 ppm.

### [Fabrication of Test Sheet]

A low carbon cold-rolled steel sheet (sheet thickness: 0.225 mm) was subjected to degreasing through immersion into a 3% solution of an alkaline degreasing agent (Surfcleaner 322N8 manufactured by Nippon Paint Co., Ltd.) at 70°C for 15 seconds. The steel sheet after the degreasing was subjected to washing with water through spraying with tap water for 30 seconds, followed by pickling through immersion into a pickling solution (5% sulfuric acid solution) at 70°C for 5 seconds. After subjecting the steel sheet to washing with water through spraying with tap water for 30 seconds, a tin-plated layer having a plate thickness of 2.8 g/m² was formed on a surface of the steel sheet using publicly known Ferrostan bath under the below-described conditions, followed by washing with water and reflow, thereby obtaining a tin-plated steel.

### (Plating Conditions)

Temperature: 40°C
Stirring: as required
Current density: 10 A/dm²
Anode material: commercially available 99.999% metal tin
Treatment time: the number of cycles of 5 to 15 by setting 1 second of a current application time + 0.50 second of a halt time as a cycle
Reflow: the obtained tin-plated steel sheet was heated to a temperature equal to or more than a melting point of tin by induction heating, followed by quenching by pouring ion exchanged water

The obtained tin-plated steel sheets were respectively immersed into to the treatment baths (bath temperature: 45°C) comprising the surface treatment agent compositions of Examples 1 to 16 and Comparative Examples 1 to 4 each having the predetermined pH value. A cathode electrolysis (electrolysis conditions: the number of cycles was adjusted to be 1 to 7 cycles by setting a cycle as 0.15 second of a current application time at a current density of 4 A/dm² + 0.50 second of a halt time and in such a manner as to maintain a coating film amount to 5 to 10 mg/m² in terms of aluminum which was measured by fluorescent X-ray measurement) was performed with stirring the treatment bath and by using as an anode an iridium oxide-coated titanium plate positioned at 17 mm from the cathode. A post-treatment including washing with running water, washing with pure water, and drying was performed immediately after the cathode electrolysis. Warm water or hot water may be used for the washing with water and washing with pure water, and properties of the coating film may be improved by reducing excessive fluorine in the coating film depending on the usage. The surface treatment agent compositions used as the treatment baths and the pH values of the treatment baths are shown in Table 3. Each of the pH values shown in Table 3 is the one detected at 25°C, and nitric acid and ammonium water were used for the pH adjustment of the treatment baths. In Test Example 42 and Test Example 43 shown in Table 3, the treatment baths which were respectively prepared by removing the precipitates from the simulant treatment baths of Example 4 and Example 16 (Table 2) were used for performing the tests described below. Test Example 42 and Test Example 43 were performed in order to confirm the surface treatment capability in the treatment bath from which the tin ions diluted from the tin-plated steel was precipitated and removed and to verify the treatment capability in the case of continuously performing the surface treatment.

### [Coating Film Amount Measurement]

After drying a coating film formed on each of the test sheets fabricated by the method described in [Fabrication of Test Sheet], an aluminum amount in the coating film was measured by using a fluorescent X-ray device (XRF-1500, product of Shimadzu Corporation), and a carbon amount (C amount) in the coating film was measured by using a carbon• hydrogen/moisture analysis device (RC612, product of Leco Japan Corporation). The results are shown in the column of "Coating film amount" of Table 3.

### [Evaluation of Coating Film Appearance]

In each of the test sheets fabricated by the method described in [Fabrication of Test Sheet], absence/presence of contaminant deposition in the form of a sludge on a surface of the coating film was investigated to evaluate homogeneity of the coating film. The contaminant deposition is observed particularly when the treatment bath develops white turbidity (i.e. is not a homogeneous solution). As the evaluation, the sample in which the contamination deposition was not observed on the coating film surface was evaluated as o, and the sample in which the contamination deposition was observed on the coating film surface or in which no coating film was formed on the test sheet was evaluated as x. The results are shown in the column of "Coating film appearance" of Table 3.

### [Coating Film Deposition Property]

The number of cycles required for depositing a coating film of 5 mg/m² in terms of aluminum on the surface of the tin-plated steel sheet in the cathode electrolysis (electrolysis conditions: 4A/dm²) described in [Fabrication of Test Sheet] was measured. The results are shown in the column of "Deposition property" of Table 3. As the evaluation, productivity was determined to be preferable when the required number of treatment cycles was 1 to 10 cycles; 1 to 6 cycles was considered to be more preferable; and less than 3 cycles was considered to be most preferable. The sample which required 10 or more cycles for depositing the coating film of 5 mg/m² (including the one which could not form any coating film) was considered to have poor productivity and is indicated as ">10".

### [Adhesion property Evaluation]

In the state where each of the test sheets fabricated by the method described in [Fabrication of Test Sheet] was heated to 230°C, a polyester film (Teflex FT-20 manufactured by Teijin DuPont Films Japan Limited; thickness: 20 µm) was thermocompression-bonded to the test sheet via a laminate roll. Water cooling was performed immediately after the thermocompression bonding to obtain a polyester-coated test sheet. Each of the polyester-coated test sheets was cut into strips each having a width of 15 mm and a length of 70 mm. A cut reaching the base material was made in the strip at the position of 30 mm from one end of the strip on the surface opposite to the measurement surface. The test strip was subjected to a hot water retort treatment at 120°C for 30 minutes, and was then immersed in water, and the test strip was pulled up from the water immediately before the measurement. Only the metal piece of the test strip was broken into two pieces from the cut formed in advance to give a site at which the two pieces are connected to each other with only the resin film corresponding to the inner side of a can. The test strip was folded in the direction of 180 degrees such that the site is the inner side and was subjected to a peeling test by peeling in the direction of 180 degrees at a tensile rate of 5 mm/min with a tensile tester. The results were used as the adhesion strengths. The results are shown in the column of "Adhesion property" of Table 3. As the evaluation, maximum tensile strength of 1N/15 mm or more when the test strip was peeled off by the tension tester (LST-200N-S100 and a load cell "LTTU-200N", products of Minebea Co., Ltd.) was evaluated to be favorable, 3N/15 mm or more was evaluated to be excellent, and 5N/15 mm or more was evaluated to be particularly excellent.

### [Sulfide Blackening Resistance Evaluation]

An epoxyphenol-based coating material was coated on each of test sheets fabricated by the method described in [Fabrication of Test Sheet] in such a manner that a coating film thickness after annealing and drying was 70 mg/dm², followed by baking at 200°C for 20 minutes. The test sheet was cut to obtain a sheet of 70 mm square, and each of the cut sections was protected with a tape having a width of 3 mm, followed by 3 mm extension processing by using an Erichsen tester (product of Coating Tester K. K.). The extended part formed by the extension processing was immersed into a model solution comprising a solution containing 4.5 g/L of potassium dihydrogenphosphate (KH₂PO₄), 12 g/L of sodium hydrogenphosphate (Na₂HPO₄•12H₂O), and 2g/L of an L-cysteine hydrochloride monohydrate and then subjected to a retort treatment in a hermetically sealed container at 115°C for 60 minutes. After that, sulfide blackening resistance was evaluated. The evaluation was conducted by determining a change in appearance by visual observation, and the sample in which a considerable change was not observed was evaluated as o, and the sample in which considerable change was observed was evaluated as x. The results are shown in the column of "Blackening resistance" in Table 3.

### [Yellowing Resistance Evaluation]

Each of the test sheets fabricated by the method described in [Fabrication of Test Sheet] was cut to obtain a sheet of 70 mm square, and the thus-obtained test sheet was heated in a 200°C oven for an hour. A degree of a change in color of the test sheet from the color before the heating to the color after the heating was investigated by using a colorimeter (product of Konica Minolta Sensing, K. K.; trade name: CM-2500d) to evaluate the yellowing resistance. The evaluation was conducted by using as a standard a color difference between colors before and after the heating in the test sheet (Reference Test Example 1) made by a chromate treatment described later in this specification and calculating a difference between a color difference before and after the heating of the test sheet as the evaluation object and the color difference used as the standard, and the sample having the difference of 1.9 or less is evaluated as ○, the sample having the difference exceeding 1.9 and less than 3 is evaluated as ○⁻, and the sample having the difference of 3 or more is evaluated as ×. The results are shown in the column of "Yellowing resistance" of Table 3. The color difference was calculated with (ΔL² + Δa² + Δb²)^{0.5}.

### [Reference Test Examples 1 and 2]

The above-described evaluations were conducted on a commercially available chromate-treated (311 treated) tinplate (Sn amount: 2.8 g/m²), and the results are shown in Table 3 as Reference Test Example 1. Also, the above-described evaluations were conducted on an untreated tin-plated steel sheet (a steel sheet described in [Fabrication of Test Sheet] on which only the tin-plating was performed), and the results are shown in Table 3 as Reference Test Example 2.

### [Electric Conductivity]

Electric conductivity of each of the surface treatment agent compositions of Examples 1 to 16 and Comparative Examples 1 to 4 after adjusting the pH value at 25°C of each of the compositions to 3.5 was measured. The results are shown in Table 4. Nitric acid and ammonium water were used for the pH adjustment.

**[Table 3]**

| | Composition | Polycarbo xylic acid(*1) | Treatment bath p H | Coating film amount mg/m² | | Coating film appearan | Depositi on ce property (*2) | Adhesion property | Blackening resistance | Yellowing resistance |
|---|---|---|---|---|---|---|---|---|---|---|
| | | | | Al | C | | | | | |
| Test Example23 | Example1 | PIA | 3.5 | 10 | 1 | ○ | 2 | 6.0 | ○ | ○ |
| Test Example24 | Example2 | PIA | 3.5 | 10 | 1 | ○ | 2 | 6.0 | ○ | ○ |
| Test Example25 | Example3 | PIA | 3.5 | 10 | 1 | ○ | 3 | 5.8 | ○ | ○ |
| Test Example26 | Example4 | PIA | 3.5 | 10 | 1 | ○ | 3 | 5.7 | ○ | ○ |
| Test Example27 | Example5 | PIA | 3.5 | 10 | 1 | ○ | 6 | 5.0 | ○ | ○ |
| Test Example28 | Example6 | PIA | 3.5 | 10 | 1 | ○ | 6 | 5.1 | ○ | ○⁻ |
| Test Example29 | Example7 | PIA | 3.5 | 7 | 1 | ○ | 10 | 3.1 | ○ | ○ |
| Test Example30 | Example8 | PIA | 3.5 | 10 | 1 | ○ | 10 | 1.8 | ○ | ○⁻ |
| Test Example31 | Example9 | PIA | 3.5 | 7 | 1 | ○ | 10 | 2.5 | ○ | ○⁻ |
| Test Example32 | Example10 | PIA | 3.5 | 10 | 1 | ○ | 10 | 1.8 | ○ | ○⁻ |
| Test Example33 | Example4 | PIA | 1.9 | 5 | 1 | ○ | 10 | 5. 7 | ○ | ○ |
| Test Example34 | Example4 | PIA | 4.2 | 10 | 1 | ○ | 3 | 5.3 | ○ | ○⁻ |
| Test Example35 | Example11 | PAA | 2.5 | 10 | 1 | ○ | 2 | 5.3 | ○ | ○ |
| Test Example36 | Examples12 | PIA | 3.5 | 10 | 1 | ○ | 4 | 5.6 | ○ | ○ |
| Test Example37 | Example13 | PIA | 3.5 | 10 | 1 | ○ | 2 | 5.5 | ○ | ○⁻ |
| Test Example38 | Example 14 | PIA | 3.5 | 10 | 1 | ○ | 2 | 3.5 | ○ | ○ |
| Test Example39 | Example15 | PIA | 3.5 | 5 | 1 | ○ | 10 | 1.5 | ○ | ○ |
| Test Example40 | Example16 | PIA | 3.5 | 10 | 1 | ○ | 2 | 1.5 | ○ | ○ |
| Test Example41 | Example2 | PIA | 0.9 | 7 | 1 | ○ | 10 | 2.4 | ○ | ○ |
| Test Example42(*3) | Example4 | PIA | 3.5 | 10 | 1 | ○ | 3 | 5.7 | ○ | ○⁻ |
| Test Example43 (*3) | Example4 | PIA | 3.5 | 10 | 1 | ○ | 3 | 3.0 | ○ | ○⁻ |
| Comparative Test Example5 | Comparative Example1 | PIA | 3.5 | 0 | 0 | × | >10 | 0.5 | × | × |
| Comparative Test Example6 | Comparative Example2 | PIA | 3.5 | 1 | 0 | × | >10 | 0.5 | × | × |
| Comparative Test Example7 | Comparative Example3 | - | 3.5 | 7 | 0 | ○ | 8 | 2.1 | O | × |
| Comparative Test Example8 | Comparative Example4 | - | 3.5 | 3 | 0 | × | >10 | 0.9 | × | × |
| Comparative Test Example9 (*4) | Comparative Example3 | - | 3.5 | 7 | 0 | ○ | 8 | 1.3 | × | × |
| Reference Test Example 1 | Chromate | - | - | Chromium 4 | 0 | ○ | - | 2.5 | O | O |
| Reference Test Example 2 | None | - | - | Untreated | Untreated | - | - | 0.3 | × | × |

| | | | | | | | | | | |
|---|---|---|---|---|---|---|---|---|---|---|
| *1 PIA stands for polyitaconic acid, and PAA stands for polyacrylic acid. *2 Each of the values shown in the column of deposition property is the number of treatment cycles of the cathode electrolysis required for forming the coating film having the predetermined thickness on the test sheet; the smaller the value is, the better the deposition property. The samples having the value ">10" include the sample on which no effective coating film was formed by the cathode electrolysis. *3 Each of Test Examples 42 and 43 shows the result of the test conducted by using the treatment bath which was obtained by removing the precipitate from the treatment bath after the test in each of Test Examples 4 and 16. *4 Comparative Example 9 shows the result of the test conducted by using the treatment bath after the test in Comparative Test Example 3. Since no precipitate was generated in the treatment bath after the test in Comparative Test Example 3, no precipitation-removing operation was performed. | | | | | | | | | | |

**[Table 4]**

| Surface treatment agent composition | pH | Electric conductivity mS/cm |
|---|---|---|
| Example 1 | 3.5 | 30 |
| Example 2 | 3.5 | 36 |
| Example 3 | 3.5 | 39 |
| Example 4 | 3.5 | 18 |
| Example 5 | 3.5 | 17 |
| Example 6 | 3.5 | 20 |
| Example 7 | 3.5 | 18 |
| Example 8 | 3.5 | 32 |
| Example 9 | 3.5 | 78 |
| Example 10 | 3.5 | 41 |
| Example 11 | 3.5 | 35 |
| Example 12 | 3.5 | 35 |
| Example 13 | 3.5 | 52 |
| Example 14 | 3.5 | 39 |
| Example 15 | 3.5 | 18 |
| Example 16 | 3.5 | 44 |
| Comparative Example 1 | 3.5 | 10 |
| Comparative Example 2 | 3.5 | 15 |
| Comparative Example 3 | 3.5 | 18 |
| Comparative Example 4 | 3.5 | 27 |

As shown in Table 3, it is understood that the coating film excellent in blackening resistance and yellowing resistance is formed on the surface of the tin-plated steel sheet by performing the electrolytic surface treatment on the tin-plated steel sheet (steel) using each of the surface treatment agent compositions of the present invention. Referring to Table 3, it is understood that the coating films formed by using the surface treatment agent compositions of the present invention have the properties equal to or better than the coating film formed by the conventional chromate treatment. From such results, it is proved that the surface treatment agent compositions of the present invention are remarkably effective in the electrolytic surface treatment of tin-plated steels.

## Claims

1. A surface treatment agent composition for tin-plated steel to be used for electrolytic surface treatment of a tin- or tin-based alloy-plated steel, comprising aluminum ions, fluorine ions and polycarboxylic acid.

2. The surface treatment agent composition for tin-plated steel according to claim 1, wherein
the polycarboxylic acid is a homopolymer containing a monomer selected from acrylic acid, methacrylic acid, maleic acid, and itaconic acid as a constitutional unit or a copolymer containing at least one of these monomers as the constitutional unit.

3. The surface treatment agent composition for tin-plated steel according to claim 1 or 2, wherein
a ratio [C group] / [Al] of a molar concentration [C group] of carboxyl groups contained in the polycarboxylic acid to a molar concentration [Al] of the aluminum ions is 0.005 to 2.0.

4. The surface treatment agent composition for tin-plated steel according to any one of claims 1 to 3, wherein
a ratio [F] / [Al] of a molar concentration [F] of the fluorine ions to a molar concentration [Al] of the aluminum ions is 1 to 4.

5. The surface treatment agent composition for tin-plated steel according to any one of claims 1 to 4, wherein
a mass concentration of the aluminum ions is 100 to 10,000 ppm.

6. The surface treatment agent composition for tin-plated steel according to any one of claims 1 to 5, wherein
a pH value at 25°C is 1 to 5.

7. The surface treatment agent composition for tin-plated steel according to any one of claims 1 to 6, comprising tin ions, wherein a mass concentration of the tin ions is 500 ppm or less.

8. A tin-plated steel which is surface-treated with the surface treatment agent composition for tin-plated steel according to any one of claims 1 to 7.
